# EUROPEAN PATENT SPECIFICATION

(11) **EP 3 845 101 B1**
(45) Date of publication and mention of the grant of the patent: **19.07.2023**
(21) Application number: 19220149.9
(22) Date of filing: 30.12.2019
(51) Int. Cl.: A47J 43/042, A47J 45/07

(54) **CONTAINER WITH HANDLE FOR A KITCHEN APPLIANCE**
BEHÄLTER MIT GRIFF FÜR EIN KÜCHENGERÄT
RÉCIPIENT AYANT UNE POIGNÉE POUR UN APPAREIL DE CUISINE

(43) Date of publication of application: 07.07.2021
(73) Proprietor: BSH Hausgeräte GmbH, 81739 München (DE)
(72) Inventor: Brecko, Ales, 3000 Celje (SI); Hribersek, Anton, 3330 Mozirje (SI); Kovacec, Bostjan, 1420 Trbovlje (SI); Krivec, Luka, 3331 Nazarje (SI)

(56) References cited:
- DE-A1- 3 902 778
- US-A- 4 930 687
- US-A- 5 183 169

## Description

### Background of the invention

The present invention relates to a kitchen appliance, more particularly to a container with handle for a kitchen appliance and a kitchen appliance comprising such a container.

### State of the Art

Many kitchen appliances for processing food such as blenders, food processors, juicers, stand mixers make use of containers of different materials. Usually low-cost, entry-level containers are made of plastic materials whereas premium, high-end containers are made of glass materials which are perceived as giving the product added value in terms of usability and appearance. Moreover, glass is still believed to ensure a safer food contact than any plastic material.

However, glass is heavy and cannot be easily formed or shaped. Treatment and machining of glass are quite complex and therefore expensive. That being said there is a need to make a container from glass and combine it with a handle from plastic material. There exist solutions that provide for arranging a plastic handle on a glass container. Most often the plastic handle is attached to the glass container by means of intermediate parts, which are screwed or glued to the handle and/or the container. If for safety reasons safety means for detecting presence of the lid on the container and its closed state in relation to the latter is also present, the situation becomes worse in that the plastic handle is more robust and oversized, depending on where the safety means are located adjacent the container or in the handle itself.

Moreover, such a construction usually covers a significant part of the container which is unappealing to the eyes of an user and gives him an impression of being low-cost. What is more, cleaning of this construction is complicated as surfaces covered by plastic components where processed food can ingress are large.

EP2120660 A1 discloses a glass receptacle with connecting means for connecting a handle to the wall of the receptacle. The connecting means comprise a connecting portion projecting from the wall. The connecting portion is intended to be accommodated within a corresponding seat of the handle that can be mounted to the connecting portion. The connecting portion has a special shape so that the handle cannot be removed from the connecting portion.

The handle is attached to the receptacle only in one point, namely in the upper region.

That being said, this solution is definitely not suitable for bigger receptacles, especially the ones made from glass which are heavier. It's even worse, if they are full of processed food or ingredients.

Furthermore, the invention comprises many components what makes it complex. For instance, a special locking cap is used to connect the handle to the connecting portion of the receptacle. A screw is needed to realize the connection.

A system for a kitchen appliance comprising the features of the preamble of claim 1 is known from US5183169.

### Problem to be solved

It is an object of the present invention to overcome the above-mentioned shortcomings of the prior art and particularly to attach a plastic handle to a glass container for a kitchen appliance in the most simple and efficient way. Moreover, a reliable and safe attachment of the handle to the container is to be provided.

### Solution according to the invention

The object is achieved by a container according to the features of claim 1. Advantageous embodiments that can be implemented by themselves or in combination are described in dependent claims.

The invention relates to a system for a kitchen appliance comprising the features of claim 1.

The attachment of the handle to the anchoring member of the container and the realization of the handle and the base in one piece enables a simple and safe connection that requires no additional parts.

The container according to the invention provides the following advantages:
- reliable and safe use of the glass container with the plastic handle
- simple and quick attachment of the handle that requires no tool (e.g. a snap-fit)
- less parts needed for connecting the handle to the container
- no need for additional attachment of the handle to the base of the container as realized in one piece

### Embodiments of the invention

According to the invention, the anchoring element is formed as a hook. The effect of this is that no glass handle which is covered with plastic elements is needed anymore. Instead, a plastic handle is attached to the anchoring element thereby providing for a lower weight of the container. Moreover, the hook shape is perfectly suitable for a form-fitting connection.

In an advantageous solution, the handle comprises a handle structure and a handle cover. In a preferred embodiment, the handle structure comprises at least one first counterconnector. Typically, there is pair of first counterconnectors. This has the effect that a better connection can be achieved.

Advantageously, the handle structure comprises also a second counterconnector.

Preferably, the handle cover comprises at least one first connector. Typically, there is pair of first connectors. This has the effect that a better connection can be achieved.

According to one preferred embodiment, the handle cover comprises also a second connector.

According to one embodiment, the handle cover is connected to the handle structure in a snap-fit manner. This is of advantage as no additional parts (e.g. screws) are required.

Specifically, the container is attachable to the base via a bayonet connection. This has the effect that a convenient connection is achieved which can be realized in a cheap way (without additional components).

Preferably, the container is made of glass. Thus, estethical appearance of the container and of the appliance as a whole is improved. User gets the impression of a high-end product.

Optionally, the safety means is provided between the handle structure and the handle cover. This accounts for a safer use of the kitchen appliance.

In a preferred embodiment, the opening is realized in the handle cover. Thus, a user knows if the lid is in a correct position in regard to the container and the appliance is safe to use.

A second aspect of the invention is a kitchen appliance comprising the container according to claim 1 or the dependent claims.

### Brief description of the figures

Fig. 1 is an exploded view of the container for a a kitchen appliance (a blender)
Fig. 2 is a section view of the container with the handle
Fig. 3 is a isometric view of the handle cover

### Detailed description

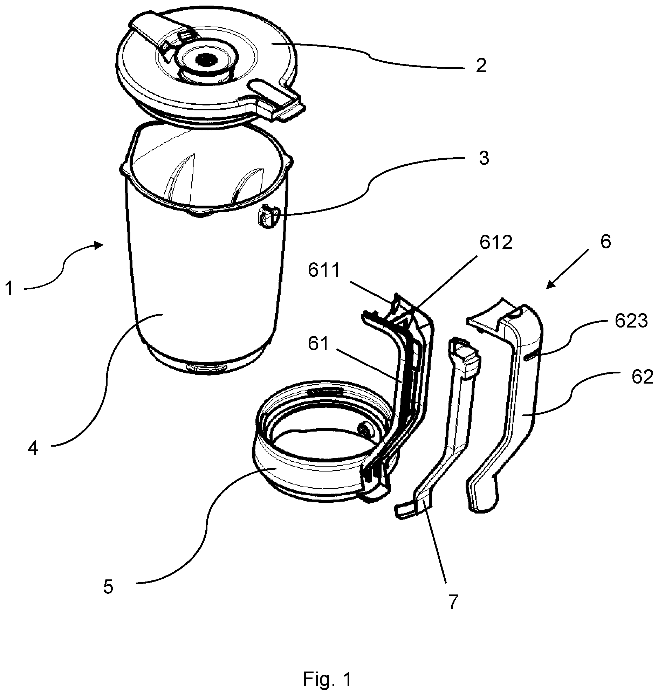

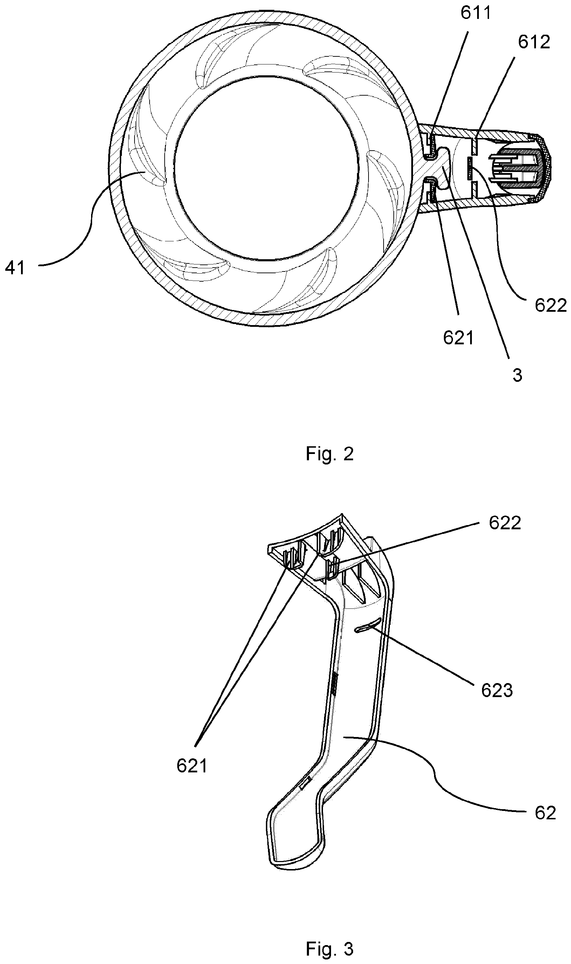

Fig. 1 depicts a container 1 for a kitchen appliance, e.g. a blender, which can be received in its base 5. The container 1 can be covered by a lid 2. A handle 6 that is integral with the base 5 comprises a handle structure 61 and a handle cover 62. In the top region of the container 1 an anchoring member 3 protrudes from the container wall 4. The anchoring member 3 extends first in a horizontal direction away from the wall 4 and then in a vertical direction basically parallel to the wall 4 as shown also in Fig 2. The anchoring member 3 is substantially formed as a hook and its outermost portion is orientated downwardly.

The handle structure 61 has a pair of first counterconnectors 611 and a second counterconnector 612 which all protrude upwardly from the upper region of the handle structure 61. The second counterconnector 612 is provided with an opening.

The first counterconnectors 611 engage with the anchoring member 3 via first connectors 621 (see also Fig. 2).

The container 1 is attachable to the base 5 via a bayonet connection. This means that the connection is established by rotating the container 1 in the base 5, more precisely in its upper region. The container 1 and the base 5 are provided with corresponding projections therefor. In its lower region the base 5 is adapted to receive a tool holder (not shown). The connection is releasable and is not realized by rotating the tool holder in the base 5. The tool holder comprises a clutch that can be coupled to an output shaft of an electrical motor of the kitchen appliance.

A safety means 7 preferably in form of a rod is provided between the handle structure 61 and the handle cover 62, more precisely in a cavity therein. When the container 1 is put on a pedestal of the kitchen machine and the lid 2 is not in a correct position in relation to the container 1, the safety means 7 is in the upper position and the kitchen machine cannot be operated as a switch in the pedestal is not activated (not shown). This prevents user from touching the blades of the processing tool and inadvertently starting the machine which could cause serious injuries.

When, in contrast, the lid 2 is in a correct position, the safety means 7 is in the lower position and the switch is activated. The machine can be started und used safely.

An opening 623 is realized in the handle cover 62. It is intended for indicating the position of the safety means 7. For instance, if the lid 2 is not properly on, the safety means 7 is in the upper position and one region (e.g. coloured in red) thereof is seen through the opening 623. If the lid 2 is in a correct position, the safety means 7 is in the lower position and its other region (e.g. coloured in green) can be observed. In that way, a user can realize a correct position and a safe use the machine. The safety means 7 is moved by means of a spring.

Fig. 2 shows the container 1 with the handle 6 in a horizontal cross-section. In this configuration the anchoring member 3 has basically a T-shape. L-shaped (as seen in this cross-section) first connectors 621 of the handle cover 62 engage with the recesses between the outer surface of the container wall 4 and the outermost portion of the anchoring member 3 and at the same time with first counterconnectors 611 of the handle structure 61. A second connector 622 of the handle cover 62 engages with a second counterconnector 612 of the handle strucure 61.

The interaction among the connectors 621, 622 and the counterconnectors 611, 612 and the anchoring member 3 provides for a especially firm form-fitting connection of the handle 6 to the container 1 and at the same time of the handle cover 62 to the handle structure 61. The connection is preferably realized in a snap-fit manner.

A plurality of flow affecting means 41 are arranged on the inner surface of the wall 4. This has the effect that more intense turbulent flow is achieved thereby improving the processing (mixing, blending) of food.

Fig. 3 depicts a handle cover 62. A pair of the first connectors 621 and the second connector 622 extend downwardly from the top face of the handle cover 62. On its periphery apertures are arranged to from a snap-fit connection with corresponding parts of the handle structure 61. An opening 623 is formed on its front side.

The solution according to the invention and any of its embodiments can be used with any kitchen appliance that requires attachment of the plastic handle to the glass container in order to use the appliance safely. For instance, those kitchen appliances are blenders, juicers, water kettles, stand mixers, compact food processors, etc.

### Reference signs list

1 container
2 lid
3 anchoring member
4 wall
41 flow affecting means
5 base
6 handle
61 handle structure
611 first counterconnector
612 second counterconnector
62 handle cover
621 first connector
622 second connector
623 opening
7 safety means

## Claims

1. A system for a kitchen appliance comprising a container (1), a lid (2) adapted to close the container (1), a handle (6), a base (5), wherein the container (1) comprises
- a wall (4),
- an anchoring member (3) being integral with the wall (4) of the container (1),
wherein the handle (6) is configured to be attached to the container (1) by means of the anchoring member (3) and the handle (6) is realized in one piece with the base (5), **characterised in that** the anchoring element (3) is formed as a hook.

2. System according to claim 1, **characterised in that** the handle (6) comprises a handle structure (61) and a handle cover (62).

3. System according to claim 2, **characterised in that** the handle structure (61) comprises at least one first counterconnector (611).

4. System according to claim 3, **characterised in that** the handle structure (61) comprises a second counterconnector (612).

5. System according to claim 2, **characterised in that** the handle cover (62) comprises at least one first connector (621).

6. System according to claim 5, **characterised in that** the handle cover (62) comprises a second connector (622).

7. System according to any of the preceding claims, **characterised in that** the handle cover (62) is connected to the handle structure (61) in a snap-fit manner.

8. System according to any of the preceding claims, **characterised in that** the container (1) is attachable to the base (5) via a bayonet connection.

9. System according to any of the preceding claims, **characterised in that** the container (1) is made of glass.

10. System according to any of the preceding claims, **characterised in that** a safety means (7) is provided between the handle structure (61) and the handle cover (62).

11. System according to claim 10, **characterised in that** an opening (623) is realized in the handle cover (62).

12. Kitchen appliance comprising the system according to any of the preceding claims.

## Patentansprüche

1. System für ein Küchengerät mit einem Behälter (1), einem Deckel (2), der so ausgelegt ist, dass er den Behälter (1) verschließt, einem Griff (6), einem Unterteil (5), wobei der Behälter (1) Folgendes umfasst:
- eine Wand (4),
- ein Verankerungselement (3), das in die Wand (4) des Behälters (1) integriert ist, wobei der Griff (6) so konfiguriert ist, dass er sich mithilfe des Verankerungselements (3) an dem Behälter (1) anbringen lässt und der Griff (6) mit dem Unterteil (5) einstückig ausgeführt ist, **dadurch gekennzeichnet, dass** das Verankerungselement (3) als Haken ausgebildet ist.

2. System nach Anspruch 1, **dadurch gekennzeichnet, dass** der Griff (6) eine Griffkonstruktion (61) und eine Griffabdeckung (62) umfasst.

3. System nach Anspruch 2, **dadurch gekennzeichnet, dass** die Griffkonstruktion (61) mindestens ein erstes Gegenverbindungsstück (611) umfasst.

4. System nach Anspruch 3, **dadurch gekennzeichnet, dass** die Griffkonstruktion (61) ein zweites Gegenverbindungsstück (612) umfasst.

5. System nach Anspruch 2, **dadurch gekennzeichnet, dass** die Griffabdeckung (62) mindestens ein erstes Verbindungsstück (621) umfasst.

6. System nach Anspruch 5, **dadurch gekennzeichnet, dass** die Griffabdeckung (62) ein zweites Verbindungsstück (622) umfasst.

7. System nach einem der vorhergehenden Ansprüche, **dadurch gekennzeichnet, dass** die Griffabdeckung (62) über eine Schnappverbindung mit der Griffkonstruktion (61) verbunden ist.

8. System nach einem der vorhergehenden Ansprüche, **dadurch gekennzeichnet, dass** sich der Behälter (1) über eine Bayonettverbindung an dem Unterteil (5) anbringen lässt.

9. System nach einem der vorhergehenden Ansprüche, **dadurch gekennzeichnet, dass** der Behälter (1) aus Glas hergestellt ist.

10. System nach einem der vorhergehenden Ansprüche, **dadurch gekennzeichnet, dass** zwischen der Griffkonstruktion (61) und der Griffabdeckung (62) ein Sicherungsmittel (7) vorgesehen ist.

11. System nach Anspruch 10, **dadurch gekennzeichnet, dass** die Griffabdeckung (62) mit einer Öffnung (623) ausgeführt ist.

12. Küchengerät mit dem System nach einem der vorhergehenden Ansprüche.

## Revendications

1. Système pour un appareil de cuisine comprenant un conteneur (1), un couvercle (2) propre à fermer le conteneur (1), une poignée (6), une base (5), dans lequel le conteneur (1) comprend
- une paroi (4),
- un élément d'ancrage (3) faisant partie intégrante de la paroi (4) du conteneur (1),
dans lequel la poignée (6) est configurée pour être attachée au conteneur (1) au moyen de l'élément d'ancrage (3) et la poignée (6) est réalisée d'une pièce avec la base (5), **caractérisé en ce que** l'élément d'ancrage (3) a la forme d'un crochet.

2. Système selon la revendication 1, **caractérisé en ce que** la poignée (6) comprend une structure de poignée (61) et un recouvrement de poignée (62).

3. Système selon la revendication 2, **caractérisé en ce que** la structure de poignée (61) comprend au moins un premier contre-connecteur (611).

4. Système selon la revendication 3, **caractérisé en ce que** la structure de poignée (61) comprend un deuxième contre-connecteur (612).

5. Système selon la revendication 2, **caractérisé en ce que** le recouvrement de poignée (62) comprend au moins un premier connecteur (621).

6. Système selon la revendication 5, **caractérisé en ce que** le recouvrement de poignée (62) comprend un deuxième connecteur (622).

7. Système selon l'une quelconque des revendications précédentes, **caractérisé en ce que** le recouvrement de poignée (62) est raccordé à la structure de poignée (61) par encliquetage.

8. Système selon l'une quelconque des revendications précédentes, **caractérisé en ce que** le conteneur (1) peut être fixé à la base (5) par un raccord à bayonnette.

9. Système selon l'une quelconque des revendications précédentes, **caractérisé en ce que** le conteneur (1) est constitué de verre.

10. Système selon l'une quelconque des revendications précédentes, **caractérisé en ce qu'**un moyen de sécurité (7) est prévu entre la structure de poignée (61) et le recouvrement de poignée (62).

11. Système selon la revendication 10, **caractérisé en ce qu'**un orifice (623) est pratiqué dans le recouvrement de poignée (62).

12. Appareil de cuisine comprenant le système selon l'une quelconque des revendications précédentes.
